**Europäisches Patentamt**

**European Patent Office**

**Office européen des brevets**

(19)

(11) Veröffentlichungsnummer: **0 143 308**
**B1**

(12) **EUROPÄISCHE PATENTSCHRIFT**

(45) Veröffentlichungstag der Patentschrift: **23.05.90**

(21) Anmeldenummer: **84112491.0**

(22) Anmeldetag: **17.10.84**

(51) Int. Cl.⁵: **A 23 L 1/2165,** A 23 L 1/164,
A 23 L 1/162

(54) **Durch Einbringen in heisses Wasser unverzüglich in den essfertigen Zustand überführbares Trockenprodukt auf Stärkebasis für die Zubereitung von Klössen.**

(30) Priorität: **27.10.83 DE 3338887**

(43) Veröffentlichungstag der Anmeldung:
**05.06.85 Patentblatt 85/23**

(45) Bekanntmachung des Hinweises auf die
Patenterteilung:
**23.05.90 Patentblatt 90/21**

(84) Benannte Vertragsstaaten:
**AT BE CH DE FR GB IT LI LU NL SE**

(56) Entgegenhaltungen:
**WO-A-84/03421
DE-C- 635 604
GB-A- 603 074
GB-A- 619 220
US-A-4 032 668
US-A-4 131 689
US-A-4 394 397**

(73) Patentinhaber: **Wilke, Gerhard, Dr.
Hölderlinweg 1
D-6900 Heidelberg (DE)**

(72) Erfinder: **Wilke, Gerhard, Dr.
Hölderlinweg 1
D-6900 Heidelberg (DE)**

(74) Vertreter: **Ratzel, Gerhard, Dr.
Seckenheimer Strasse 36a
D-6800 Mannheim 1 (DE)**

Courier Press, Leamington Spa, England.

## Beschreibung

Die Erfindung betrifft ein durch Einbringen in heißes Wasser unverzüglich in den eßfertigen Zustand überführbares Trockenprodukt auf Stärkebasis in Flocken-, Bröckchen- oder Granalienform mit verdichteter Haut für die Zubereitung von Klößen in wasserdurchlässigen Beuteln, wobei das Trockenprodukt dadurch erhältlich ist, daß man aus dem Ausgansmaterial auf Stärkebasis mit üblichen Zutaten ein feuchtes Gemisch bildet, dieses knetet, zu einem Massefilm auswalzt, diesen erhitzt, trocknet und zerkleinert.

Die Erfindung schafft also ein Trockenprodukt auf Stärkebasis aus dem unverzüglich sogenannten Beutelknödel hergestellt werden können, die sich zwischenzeitlich großer Beliebtheit erfreuen. Diese Beutelknödel sparen schon bisher einen wesentlichen Teil der Zubereitungszeit und ermöglichen insbesondere auch dem im Haushalt Ungeübten die Herstellung von verzehrfertigen Knödeln in immer gleichmäßig guter Qualität. Trotz der unbestreitbaren Vorzüge derartiger Beutelknödel wurde bisher jedoch stets noch eine gewisse Zeit für deren Zubereitung benötigt.

Vor allem für den Verzehr außer Haus ergab sich daher der Wunsch und das Bedürfnis nach der Schaffung von Knödeln mit nur minimalster Zubereitungszeit ohne die Notwendigkeit eines eigentlichen Kochvorganges, d. h. die Schaffung eines sogenannten "Instantknödels", der bereits durch Einbringen in heißes Wasser unverzüglich d. h. in einer Minute oder in wenigen Minuten verzehrbereit ist.

Diese Aufgabe wird bei einem in den eßfertigen Zustand überführbaren Trockenprodukt der eingangs genannten Gattung erfindungsgemäß dadurch gelöst, daß man das Erhitzen auf Walze oder Band so durchführt, daß auf der Unterseite des Massefilms eine Hautbildung stattfindet, während der Massefilm noch eine Restfeuchte von mindestens 20% aufweist und daß man solche Walzen- oder Bandtemperaturen einhält, die ein stoßweises Verdampfen mindestens eines Teils des vorhandenen Wassers bewirken, wodurch eine zumindest teilweise Durchlöcherung der häutigen Materialoberfläche erreicht wird.

Nach einer bevorzugten Ausführungsform ist die Ausgangsfeuchte des Massefilms mindestens 40%.

Der Massefilm beruht ferner bevorzugtermaßen auf einer Brotteigmasse-Basis oder auf einer Kartoffel-Basis.

Es ist ferner besonders vorteilhaft, daß das stoßweise Verdampfen zumindest eines Teils des vorhandenen Wassers bei einer Walzenoberflächentemperatur von 125°C oder einer Bandoberflächentemperatur von 140°C durchgeführt wird.

Zum nächstkommenden Stand der Technik ist die US—A—4 131 689 zu nennen, die sich mit einem Verfahren zur Herstellung von in heißem Wasser quellenden flockenförmigen Trockenprodukten aus rohen und/oder halbgaren und/oder gekochten Kartoffeln oder anderen Ausgangsstoffen auf Stärkebasis für die Zubereitung von Klößen durch Einbringen von mit dem Trockenprodukt gefüllten wasserdurchlässigen Beuteln oder sonstigen Behältnissen in heißes oder kochendes Wasser bezieht, wobei man den Augsgangsstoff unter Beigabe der üblichen Zutaten zu einem Teig knetet, diesen Teig durch ein Walzwerk mit Walzenvoreilung leitet, den gebildeten feuchten Film von der letzten Walze mittels eines Abnahmemessers auf ein Band überträgt und ihn hierauf mittels Warm- oder Heißluft so lange trocknet, bis eine hornartige verdichtete Oberfläche mit Schuppenstruktur erhalten ist und dann zerkleinert.

Dieses Verfahren gemäß US—A—4 131 689 ist nicht bestimmt und nicht geeignet "Instant-Knödel" im Sinne der obigen Definitionen zu schaffen.

Insbesondere ist in der vorgenannten Druckschrift zum Stand der Technik keine Angabe über ein stoßweises Verdampfen zumindest eines Teils des Wassers enthalten.

Die überraschenden Eigenschaften des neuen Produkts stützen zusätzlich die Erfindungsqualität der neuen Lehre zum technischen Handeln. Wenn man das erfindungsgemäße Trockenprodukt in einen Kochbeutel eingibt, so läßt sich durch Einbringen desselben in heißes Wasser in kürzester Zeit, d.h. in 1 bis 4 Minuten ein genußfertiger Knödel herstellen. Dies war mit den bisherigen vergleichbaren Produkten des Standes der Technik nicht möglich, nachdem diese eine längere Garzeit benötigen, nämlich mindestens 15 Minuten. Der gegarte Knödel gemäß vorliegender Erfindung weist eine lockere Struktur auf, wobei sich das Produkt nicht klebrig anfühlt.

Im Haushalt geschieht das Aufschließen und Verkleistern der Stärke von stärkehaltigen Rohprodukten entweder durch Kochen in Wasser oder Erhitzen in Dampf, wie beispielweise bei der Zubereitung von gekochten Kartoffeln, bei denen die Stärke im ursprünglichen Zellverband verbleibt, im Zellwasser der Zelle quillt und durch die Erhitzung aufgeschlossen wird.

Eine andere übliche Verkleistungs- oder Aufschliessungsart der Stärke findet beim Backvorgang statt, bei dem ein mehr oder minder zäher Teig gebildet wird, der beim Backen auf eine Temperatur erhitzt wird, welche über der Verkleisterungstemperatur aller Stärketeilchen liegt.

Im Falle von Knollengewächsen, wie der Kartoffel, aber auch anderer stärkehaltiger Knollengewächse, wird noch eine zweite Zustandsform der verkleisterten Stärke erhalten, nämlich dann, wenn die rohe Knolle zu einem Brei gerieben wird und dieser Brei in einer Pfanne erhitzt wird. Da die einzelnen Stärketeilchen in einer nicht unerheblichen Menge außerhalb des Zellverbandes liegen und nachdem noch Zellenzyme wirksam werden können, entsteht aus dem gleichen Rohstoff ein andersartiges Produkt, das je nach dem Erhitzungsgrad eine zähschleimige Substanz darstellt.

Um ein geeignetes Trockenprodukt für Beuteulknödel zu erhalten, könnte man daran denken, aus gekochten Kartoffeln, nach deren Vorzerkleinerung, dies auf einem Walzentrockner zu trocknen und die entstehenden Flocken in die Beutel zu füllen.

Derartige Flocken aus gekochten, getrockneten Kartoffeln sind seit langem bekannt und im Handel.

Füllt man derartige Flocken in den Kochbeutel und bringt diese Beutel in heißes Wasser, so geschieht folgendes:

Die äußeren Randschichten des Beutelinhalts quellen sehr schnell auf, so daß eine dichte, wasserundurchlässige Zone entsteht und der größte Teil des Beutelinhalts bleibt trocken und unbenetzt.

Auch selbst wenn es einmal ausnahmsweise gelingen sollte, durch sehr langsames Einbringen des Beutels in Wasser von niedriger Temperatur den größten Teil des Beutelinhalts zu benetzen, so hat die daraus resultierende Masse im Innern des Kochbeutels keine kloßähnliche Konsistenz und Struktur. Mann kann den Beutelinhalt weder schneiden noch mit zwei Gabeln aufreißen.

Das erhaltene Produkt besitzt die Konsistenz eines dicken Kartoffelbreies.

Versucht man aus der anderen Zustandsform der Kartoffel, nämlich aus geriebenen rohen Kartoffeln und gleichzeitigem Erhitzen und Trocknen Flocken aus aufgeschlossenen rohen Kartoffeln zu gewinnen, so ist es zwar möglich, diese Flocken in einem Kochbeutel nach Einbringen in heißes Wasser zum Quellen zu bringen, das so erhaltene Produkt stellt jedoch einen zähen, langsam fließenden Brei dar, der mit einem Knödel ebenfalls nichts zu tun hat.

Vermischt man dagegen erfindungsgemäß gekochte bzw. gedämpfte, getrocknete Kartoffeln in Griesform mit roh geriebenen Kartoffeln, also von Masseteilchen, deren Stärke bereits im Falle der gekochten Kartoffel aufgeschlossen, ist, mit solchen, deren Stärke noch roh und nur zum Teil im natürlichen Zellverband aufgeschlossen vorliegt, so erhält man nach dem Aufbringen auf eine über die Verkleisterungstemperatur der Stärke erhitzte Unterlage bzw. Walze einen Massefilm, der eine unregelmäßige leicht fasrige Struktur aufweist.

Diese Massefilmteilchen können unter gleichzeitiger Troknung in flockenähnliche Gebilde zerlegt oder auch unter Einschaltung von Granulationseinrichtungen in Granula verschiedenster Struktur gebracht werden.

Außer den oben beschriebenen Kartoffelteilchen aus teilweise gekochten und teilweise rohen Kartoffeln bestehend, können aber auch nur aus rohen Kartoffeln erfindungsgemäße Trockenprodukte hergestellt werden.

Beispielsweise gibt man also erfindungsgemäß zunächst die rohe, geriebene Kartoffelmasse in eine Zentrifuge oder Presse und entfernt mit dieser Presse oder Zentrifuge den ausgetretenen Saft. Dieser Saft der rohen Kartoffelmasse enthält neben Wasser und den darin gelösten Stoffen auch einen Teil der ausgetretenen Kartoffelstärke.

Verknetet man die rohe, fasrige Zentrifugen- bzw. Pressmasse mit der au dem Preßsaft abgeschiedenen Stärke und vermischt diese Masse mit dem ausgefällten Kartoffeleiweiß des Preßsaftes und fügt zum Schluß 30% des restlichen Kartoffelsaftes zu, so kann dieses Gemisch genau so wie oben beschrieben weiterverarbeitet werden.

Man erhält dann flockenähnliche Teilchen bzw. Granula, die in einen Kochbeutel gefüllt einen Instantknödel aus sogenannter roher Kartoffelmasse ergeben.

Man kann bei der Schaffung des erfindungsgemäßen Trockenproduktes zur Erzielung der häutigen Form der Partikeloberflächen die Temperatur auf einer Trocknungswalze oder der Trocknungsunterlage so stark erhöhen, z.B. auf 125°C, daß die Unterseite des Massefilms auf der Trockenwalze oder der Bandplatte schon völlig trocklen ist, wähend der darüberliegende größere Teil des Massefilms noch eine Restfeuchte von über 20% aufweist.

Somit ergibt sich nach der endgültigen Restrocknung bzw. dem Feuchteausgleich der ganzen Trockenteilchen ein Produkt, welches auf einer Seite eine häutige Oberflächenzone aufweist.

Die Verkleistern der Stärke ist sowohl aus technischen, wie auch aus gesundheitlichen Gründen notwendig, da beim Einbringen eines Instantbeutelknödels in heißes Wasser eine für die rasche und vollständige Verkleisterung der Stärke notwendige Temperatur in der Regel nicht erreicht wird.

Ohne ausreichende Vorverkleisterung der Stärke des Trockenprodukts wird die Struktur des fertigen Kloßes ungenügend, sie erhält keine lockere Festigkeit, sondern mehr einen ungebundenen, fließend klebenden Zustand. Es ist aber auch aus gesundheitlicher Sicht wichtig, das vor dem Verzehr eines stärkehaltigen Produktes die Stärketeilchen ausreichend gequollen bzw. verkleistert sind.

### Beispiel 1

10 kg grober Grieß aus getrockneten und geschälten, vorgegarten Kartoffeln werden mit 8 kg einer geriebenen Kartoffelmasse aus rohen Kartoffeln, deren Reibsel eine Breite von 1 bis 1,5 mm und eine Länge von 5 bis 10 mm besitzen, vermischt.

Dazu werden gegeben:

0,8 kg Weizengrieß
0.1 kg Trockeneiweiß
0,18 kg Kochsalz
0,04 kg Gewürze

Daz Ganze wird 5 Minuten in einem Kneter vermischt und anschließend auf eine Walze gegeben, welche eine Oberflächentemperatur von 125°C aufweist, wodurch mehrere Anpreßwalzen eine Filmdicke des zu behandelden Materials von 1,8 mm eingestellt wird.

Auf der Oberfläche der Walze laufen nacheinander zwei Vorgänge ab. Zunächst wird der Teil des Films, welcher unmittelbar auf der Walzenoberfläche aufliegt, stark erhitzt. Es erfolgt dabei eine Hautbildung auf der Unterseite des Materialfilms.

Diese Haut ist zunächst noch zäh elastisch. Da die Walzenoberfläche eine Temperatur von 125°C aufweist, wird unmittelbar darauf ein Teil des in der Filmmasse enthaltenen Wassers stoßweise verdampft. Gleichzeitig wird sowohl durch Wärmeleitung von der Oberseite der Heizwalze aus, als auch durch den Kontakt mit dem stoßweise verdampfenden Wasserdampf die Masse über den Verkleisterungspunkt der Stärke erhitzt.

Durch die Verkleisterung der Stärke verändert sich die Konsistenz des Films erheblich.

Diese Konsistenzveränderung wirkt sich so aus, daß der Weg des verdampfenden Wassers in Form von Poren, welche die gesamte Filmdicke durchsetzen, erhalten bleibt.

Wenn der gesamte Film eine Restfeuchte von ca. 25% Wassergehalt erreicht hat, wird dieser mit einem Schabemesser abgenommen und in einem Trockenkanal auf eine Restfeuchte von 5% weiter getrocknet.

Die primär auf der Heizwalze gebildete Haut weist nach dem vollständigen Trocknen gegenüber dem Rest des Films eine Verdichtung auf, während das übrige Material mit Poren durchsetzt ist.

Nach dem Ende des Trocknungsvorganges wird der Film mittels einer Brechvorrichtung in unregelmäßig geformte Stücke von 3 bis 6 mm Kantenlänge zerlegt.

### Beispiel 2

20 kg rohe Kartoffeln werden nach gründlicher Reinigung geschält und mittels einer Reibevorrichtung in Reibsel von 1,5 mm Breite und 5 bis 10 mm Lànge zerrieben.

Diese Reibsel werden in eine Zentrifuge gegeben bis der Zentrifugenrückstand eine Feuchte von 40 bis 45% Wassergehalt aufweist.

Das abzentrifugierte Fruchtwasser von ca 10 kg wird nochmals erneut zentrifugiert und die darin erhaltene Kartoffelstärke abgetrennt (0,5 bis 1 kg je nach Kartoffelsorte).

Anschließend wird durch pH-Änderung durch Zugabe von 20 g Zitronensäure und Erhöhung der Temperatur auf 60°C das im Kartoffelsaft befindliche Eiweiß zum Ausfällen gebracht. Man erhält ca 200 g feuchtes Kartoffeleiweiß.

Zu feuchtes Kartoffeleiweiß.

Zu den 10 kg Zentrifugalrückstand mit einer Feuchte von 40 bis 45% und den 0,5 bis 1 kg Frischkartoffelstärke und den 0,2 kg Feuchtkartoffeleiweiß werden noch 3 kg trockene Kartoffelstärke, sowie 0,175 kg koagulierbares Trockeneiweiß, 0,2 kg Magermilchpulver, 0,12 kg Kochsalz und 0,1 kg Gewürze hinzugefügt.

Diese Masse wird anschließend in gleicher Weise behandelt wie im Beispiel 1 beschrieben.

### Beispiel 3

25 kg Weizenmehl werden vermischt mit 1 kg frisch aufgeschlangener Volleimasse.

Dazu werden gegben:
8 Liter Magermilch
0,3 kg Kochsalz
0,15 kg Backpulver

0,2 kg Gewürze.

Diese Zutaten werden 10 Minuten in einem Mischkneter geknetet und anschließend über ein Teigwalzwerk zu einem Film von 1000 mm Breite und 3 mm Stärke ausgezogen.

Dieser Film wird auf ein beheiztes Band mit einer Oberflächentemperatur von 140°C überführt.

Dabei geschieht folgendes: Die dünne Materialschicht, welche mit dem heißem Band in direkten Kontakt kommt, wird sehr rasch erhitzt.

Es bildet sich, unterstützt von dem gerinnungsfähigen Eiweiß auf der Unterseite des Films eines dünne, elastische Haut; unmittelbar darauf verdampft stoßweise das im Filmmaterial enthaltene Wasser. Durch den Wasserdampft wird die übrige Masse erhitzt und die darin enthaltene Stärke verkleistert.

Da der Massefilm nur von unten erhitzt wird, ist die Oberfläche des Films noch so plastisch, daß der gebildete Wasserdampf entweichen kann, wodurch zahlreich kleine Poren gebildet werden. Wenn der Film eine Restfeuchte von 20% aufweist, wird er in einen Trockenkanal überführt und bei 60 bis 70°C bis zu einer Restfeuchte von 5% getrocknet. Anschließend wird der Film einer Zerkleinerung unterworfen und zu Einzelteilchen mit einer Korngröße von ca 4 mm geschrotet.

### Patentansprüche

1. Durch Einbringen in heißes Wasser unverzüglich in den eßfertigen Zustand überführbares Trockenprodukt auf Stärkebasis in Flocken-, Bröckchen- oder Granalienform mit verdichteter Haut für die Zubereitung von Klößen in wasserdurchlässigen Beuteln, wobei das Trockenprodukt dadurch erhältlich ist, daß man aus dem Ausgangsmaterial auf Stärkebasis mit üblichen Zutaten ein feuchtes Gemisch bildet, dieses knetet, zu einem Massefilm auswalzt, diesen erhitzt, trocknet und zerkleinert, dadurch gekennzeichnet, daß man das Erhitzen auf Walze oder Band so durchführt, daß auf der Unterseite des Massefilms eine Hautbildung stattfindet, während der Massefilm noch eine Restfeuchte von mindestens 20% aufweist und daß man solche Walzen- oder Bandtemperaturen einhält, die ein stoßweises Verdampfen zumindest eines Teils des vorhandenen Wassers bewirken, wodurch eine zumindest teilweise Durchlöcherung der häutigen Materialoberfläche erreicht wird.

2. Trockenprodukt nach Anspruch 1, dadurch gekennzeichnet, daß die Ausgangsfeuchte des Massefilms eine Feuchte von mindestens 40% besitzt.

3. Trockenprodukt nach Anspruch 1 oder 2, dadurch gekennzeichnet, daß der Massefilm auf einer Brotteigmasse-Basis beruht.

4. Trockenprodukt nach Anspruch 1 oder 2, dadurch gekennzeichnet, daß der Massefilm auf einer Kartoffelbasis beruht.

5. Trockenprodukt nach einem der vorhergehenden Ansprüchen dadurch gekennzeichnet, daß das stoßweise Verdampfen zumindest eines Teils des vorhandenen Wassers bei einer Walzenoberflächentemperatur von 125°C oder einer Bandoberflächentemperatur von 140°C durchgeführt wird.

## Revendications

1. Produit sec à base d'amidon convertible instantanément à l'état "prêt à consommer" par immersion dans l'eau chaude pour la préparation des querelles dans des sacs imperméables à l'eau dans la forme de flocons, de petits morceaux ou de granules avec de la peau condensée le produit sec étant obtenable en formant un melange humide du matériel du départ a base d'amidon avec des ingredients usuels, en le pétrissant, laminant dans un fillme de massse, on le chauffe, sèche et concasse, charactérisé en ce qu'on exécute la chauffage sur le rouleau ou la bande de telle manière qu'une formation de peau prends place sur la sous-côté du film de masse, pendant le film de masse a encore une humidité résiduelle au moins de 20 pourcent et qu'on maintient des températures du rouleau ou de la bande pour effectuer une evaporation intermittente au moins d'une part de l'eau présent, par laquelle une perforation au moins partielle de la surface du matériel membraneuse est atteindu.

2. Produit sec selon revendication 1, characterisé en ce qu la humidité du départ a une humidité au moins de 40 pourcent.

3. Produit sec selon revendication 1 ou 2, characterisé en ce qu le film de masse est à la base de pâte de pain.

4. Produit sec selon revendication 1 ou 2, characterise en ce que le film de masse est à la base de pomme de terre.

5. Produit sec selon une des revendications précédantes, characterisé en ce que la evaporation intermittente au moins d'une part de l'eau présent est exécutée à une température de la surface de rouleau de 125°C ou à une température de la surface de bande de 140°C.

## Claims

1. Dried starch product instantly convertible into a ready-to-eat condition by immersion in hot water for the preparation of dumplings in form of flakes, crumbs or granules with thickened skin in water-impermeable bags, whereby the dried product is obtainable by forming a wet mixture out of the starting material on starch basis with usual ingredients, kneading the latter, rolling to a mass-film, heating, drying and comminuting this mass-film, characterized in that the heating on roll or band is carried out in such a way that a skin-formation takes place on the lower side of the mass-film, while the mass-film still features a remaining humidity of at least 20% and that one maintains such roll- or band-temperatures which induce an intermitten evaporation of at least part of the available water, whereby an at least partial perforating of the skin-like material surface is achieved.

2. Dried product according to claim 1, characterized in that the starting humidity of the mass-film has a humidity of at least 40%.

3. Dried product according to claim 1 or 2, characterized in that the mass-film is based on a dough for bread mass-basis.

4. Dried product according to claim 1 or 2, characterized in that the mass-film is based on a potato-basis.

5. Dried product according to one of the preceding claims, characterized in that the intermittent evaporation of at least part of the available water is carried out at roll surface temperature of 125°C or a band surface temperature of 140°C.